# EUROPÄISCHE PATENTANMELDUNG

(11) **EP 1 923 579 A1**
(43) Veröffentlichungstag der Anmeldung: **21.05.2008**
(21) Anmeldenummer: 06124147.7
(22) Anmeldetag: 15.11.2006
(51) Int. Cl.: F16B 7/18

(54) **Vorrichtung zum Verbinden zweier Elemente miteinander, Montagevorrichtung und Verfahren zum Verbinden zweier Elemente miteinander**

(71) Anmelder: Band, Richard, D-91183 Abenberg (DE); Band, Franz, 90559 Burgthann (DE)
(72) Erfinder: Band, Richard, D-91183 Abenberg (DE); Band, Franz, 90559 Burgthann (DE)
(74) Vertreter: Zech, Stefan Markus

(57) **Zusammenfassung**

Die Erfindung betrifft eine Vorrichtung (1, 21) zum Verbinden wenigstens zweier Elemente (30, 31) miteinander, welche an den beiden Elementen (30, 31) angeordnet wird, eine Montagevorrichtung aufweisend eine derartige Vorrichtung (1, 21) und ein Verfahren zum Verbinden zweier Elemente (30, 31) miteinander unter Verwendung einer derartige Vorrichtung (1, 21). Die Vorrichtung weist wenigstens einen Spannmechanismus mit einem Bolzen (6) und einer Spannschraube (5) auf, welche hintereinander zumindest teilweise in einer zumindest teilweise mit einem Gewinde (8) versehenen Durchgangsöffnung (7) angeordnet sind, so dass durch ein Anziehen der Spannschraube (5) in dem Gewinde (8) der Durchgangsöffnung (7) der Bolzen (6) derart vorantreibbar ist, dass dieser gcgcn eines der zwei miteinander zu verbindenden Elemente (30, 31) pressbar ist.

## Beschreibung

Die Erfindung betrifft eine Vorrichtung zum Verbinden zweier Elemente miteinander, welche Vorrichtung an den beiden Elementen angeordnet wird. Die Erfindung betrifft außerdem eine Montagevorrichtung mit einer derartigen Vorrichtung sowie ein Verfahren zum Verbinden zweier Elemente miteinander.

Einzelelemente, die gleichartig oder verschiedenartig ausgebildet sein können, können mit Hilfe von Verbindungsvorrichtungen zu größeren Gebilden miteinander verbunden werden, die eine bestimmte Funktion erfüllen bzw. erfüllen sollen. So gibt es Verbindungssysteme, die beispielsweise eine Vielzahl von Elementen in Form von verschiedenen Profilstäben aus Aluminium aufweisen, wobei die Profilstäbe mittels sogenannter Verbinder, wie bereits erwähnt, zu größeren Gebilden miteinander verbunden werden können. Die Profilstäbe weisen hierzu in der Regel wenigstens eine Profilnut auf, so dass ein Verbinder, welcher sowohl teilweise in die Profilnut eines ersten Profilstabs als auch teilweise in die Profilnut eines zweiten Profilstabs eingebracht und bezüglich des ersten und zweiten Profilstabs fixiert worden ist, die beiden Profilstäbe in der Regel lösbar miteinander verbindet.

Damit ein Verbinder, welcher beispielsweise eine Spannschraube aufweist, zwei Profilstäbe unter Verschraubung verschiebungsfrei miteinander verbinden kann, sind die Profilnuten der beiden Profilstäbe in der Regel entsprechend vorgearbeitet. So kann eine Profilnut beispielsweise eine Bohrung aufweisen, die u.a. unter Berücksichtigung der Abmessungen der Profilnut und eines Verbinders versetzt zur Längsachse der Spannschraube des Verbinders ist. Wird ein Verbinder zum Verbinden zweier Profilstäbe definiert zumindest teilweise in den Profilnuten zweier miteinander zu verbindender Profilstäbe angeordnet und die Spannschraube des Verbinders angezogen, so will diese beim Anziehen dem versetzten Zentrum bzw. der versetzten Längsachse der Bohrung in der Profilnut des einen Profilstabes folgen, wodurch eine gewisse Verspannung zwischen dem Verbinder und den Profilstäben erfolgt. Dadurch wird insbesondere ein Verschieben des Verbinders und der Profilstäbe relativ zueinander verhindert. Nachteilig an dieser Ausgestaltung ist, dass ein Profilstab eigens bearbeitet, nämlich mit einer Bohrung versehen werden muss, um eine verschiebungssichere Verbindung zwischen den Profilstäben und dem Verbinder herstellen zu können. Darüber hinaus ist der Spannweg für das Verspannen des Verbinders und der Profilstäbe verhältnismäßig gering. Zudem ergibt sich eine Stoßempfindlichkeit durch die geringe Auflage zwischen Verbinder und Profilstab.

Andere Systeme weisen zur verschiebungssicheren Verbindung eines Verbinders mit Profilstäben Kerbungen in den Profilstäben als Gegenlager für Spannschrauben auf. Diese Kerbungen müssen allerdings ebenfalls vor dem Einbringen des Verbinders in die Profilnuten durch spezielle Werkzeuge in den Profilnuten der Profilstäbe erzeugt werden. Bei dieser Variante ergeben sich vor allem beim Anziehen der Spannschraube Probleme, da beim Anziehen der Spannschraube, die mit ihrer Schraubenstirnfläche auf die Kerbung des Profilstabes drückt, hohe Bremskräfte auftreten, die dem Anziehmoment der Schraube entgegenwirken. Je höher der Spanndruck umso größer ist die Eigenbremsung der Spannschraube an der Kerbung, weshalb mit diesen Systemen nur geringe Spannkräfte übertragen werden können.

Der Erfindung liegt daher die Aufgabe zugrunde eine Vorrichtung, eine Montagevorrichtung und ein Verfahren der eingangs genannten Art derart anzugeben, dass die Verbindung zweier Elemente miteinander möglichst vereinfacht wird.

Nach der Erfindung wird die die Vorrichtung betreffende Aufgabe gelöst durch eine Vorrichtung zum Verbinden wenigstens zweier Elemente miteinander, welche Vorrichtung an den beiden Elementen angeordnet wird, aufweisend wenigstens einen Spannmechanismus mit einem Bolzen und einer Spannschraube, welche hintereinander zumindest teilweise in einer zumindest teilweise mit einem Gewinde versehenen Durchgangsöffnung angeordnet sind, so dass durch ein Anziehen der Spannschraube in dem Gewinde der Durchgangsöffnung der Bolzen derart vorantreibbar ist, dass dieser gegen eines der zwei miteinander zu verbindenden Elemente pressbar ist. Erfindungsgemäß ist der Spannmechanismus also geteilt und weist eine Spannschraube und einen Bolzen auf, wobei nicht mehr die Spannschraube mit einem Element in Wechselwirkung tritt, sondern der von der Spannschraube vorantreibbare Bolzen. Durch diese Ausgestaltung der Vorrichtung wird die Reibkraft bzw. die Bremskraft der Schraube beim Anziehen der Schraube auf einen Bruchteil gegenüber herkömmlichen Systemen reduziert. Der Bolzen verursacht beim Anziehen der Schraube dabei in der Regel nur geringe Reibkräfte, da der Bolzen in der Regel keine oder nur in geringem Umfang eine Drehung um seine Achse vollzieht. Vielmehr erfährt der Bolzen im Wesentlichen nur eine Schubkraft durch die Schraube, die ihn in Schubrichtung vorantreibt.

Der Bolzen wird demnach mittels der Schraube gegen eines der miteinander zu verbindenden Elemente gepresst, wobei der Bolzen bevorzugt in das Material des Elementes unter Bildung einer Kerbvertiefung eingepresst wird, so dass ohne zusätzliche vorherige Bearbeitung der Elemente eine sichere verschiebungsfreie Verspannung zwischen der Vorrichtung und den Elementen erreicht werden kann.

Nach einer Variante der Erfindung umfasst die Vorrichtung einen wenigstens eine Anlagefläche aufweisenden Korpus und wenigstens einen wenigstens eine Anlagefläche aufweisenden Kopf, welche vorzugsweise über einen Steg miteinander verbunden sind.

Nach Ausführungsformen der Erfindung kann der Korpus zum Verbinden der beiden Elemente miteinander zumindest teilweise in oder an dem ersten der beiden Elemente angeordnet werden, wobei die wenigstens eine Anlagefläche des Korpus an wenigstens einer Gegenfläche des ersten Elementes zur Anlage bringbar ist. Bevorzugt kann der Korpus in einer Nut des ersten der beiden Elmente angeordnet werden, wobei die wenigstens eine Anlagefläche des Korpus an wenigstens einer Gegenfläche der Nut des ersten Elementes zur Anlage bringbar ist. Bei der Nut kann es sich beispielsweise um eine Profilnut mit einem ankerförmigen Hohlprofil handeln, in dem der Korpus der Vorrichtung zumindest teilweise angeordnet werden kann. In diesem Fall wirken zwei Gegenflächen der Profilnut als Widerlager für zwei Anlageflächen des Korpus, die unter anderem bei der Verspannung des Korpus in der Profilnut des Elementes gegeneinander gepresst werden.

Weitere Ausführungsformen der Erfindung sehen vor, dass der Kopf der Vorrichtung zum Verbinden der beiden Elemente miteinander zumindest teilweise in oder an dem zweiten der beiden Elemente angeordnet werden kann, wobei die wenigstens eine Anlagefläche des Kopfes an wenigstens einer Gegenfläche des zweiten Elementes zur Anlage bringbar ist. Bevorzugt weist auch das zweite Element eine Nut, insbesondere eine Profilnut mit einem ankerförmigen Hohlprofil auf, so dass die wenigstens eine Anlagefläche des Kopfes an wenigstens einer Gegenfläche der Profilnut des zweiten Elementes zur Anlage bringbar ist. Auch die Profilnut des zweiten Elementes verfügt bei dieser Variante über zwei Gegenflächen, die als Widerlager für die Anlagefläche des Kopfes der Vorrichtung dienen.

Nach einer Ausführungsform der Erfindung sind die Spannschraube und der Bolzen des Spannmechanismus im Wesentlichen axial fluchtend hintereinander angeordnet. In diesem Fall handelt es sich bei der Durchgangsöffnung bevorzugt um eine Durchgangsbohrung, die in ihrem ersten Teil das Gewinde für die Spannschraube aufweist und in ihrem zweiten Teil den Bolzen aufnimmt. Die Durchgangsöffnung könnte jedoch beispielsweise auch zwei Teilbohrungen aufweisen, die leicht zueinander versetzt sind, sich doch beispielsweise in der Mitte der Vorrichtung zur Ausbildung der Durchgangsöffnung treffen. Die Spannschraube wäre dann in der einen mit einem Gewinde versehenen Teilöffnung und der Bolzen in der anderen Teilöffnung angeordnet. In diesem Fall bestünde die Möglichkeit zwischen Spannschraube und Bolzen ein Übertragungselement vorzusehen, welches beim Anziehen der Schraube auf den Bolzen einwirkt und diesen vorantreibt.

Nach einer Variante der Erfindung wirkt aber die Spannschraube unmittelbar auf den Bolzen ein. Um insbesondere die Reibkräfte bzw. Bremskräfte beim Zusammenwirken der Spannschraube mit dem Bolzen gering zu halten, ist die Fläche der Spannschraube, mit der die Spannschraube mit dem Bolzen in Wechselwirkung tritt, also die Stirnfläche der Spannschraubenspitze möglichst klein. Ausführungsformen der Erfindung sehen daher vor, dass die Spannschraube eine Kugelspitze oder einen Flachkegel an ihrer dem Schraubenkopf abgewandten Seite aufweist.

Zur Verminderung der Reibkräfte beim Vorantreiben des Bolzens kann auch ein Schmiermittel zwischen der Spannschraube und dem Bolzen vorgesehen bzw. vorhanden sein.

Der vorzugsweise zylinderförmige Bolzen ist nach einer Ausführungsform der Erfindung auf seiner der Spannschraube abgewandten Seite derart ausgebildet, dass durch das Vorantreiben des Bolzens in einem Element eine Kerbvertiefung erzeugbar ist. Varianten der Erfindung sehen daher vor, dass der Bolzen auf seiner der Spannschraube abgewandten Seite einen Hohlkegel, eine Hohlkehle oder eine Nut aufweist, um die Kerbvertiefung in dem Element erzeugen zu können. Zu diesem Zweck ist der Bolzen nach einer Ausführungsform der Erfindung aus einem harten Material, bevorzugt aus einem gehärteten Stahl, ausgebildet.

Zur Erzeugung einer hinreichenden Verspannung beim Verbinden der Elemente miteinander mittels der Vorrichtung ist die den Spannmechanismus beherbergende Durchgangsöffnung unter einem Winkel zur Längsachse der Vorrichtung angeordnet. Der Bolzen wird aber bevorzugt nicht in einem 90 °-Winkel zu einer Befestigungsfläche eines Elementes in das Element getrieben, sondern unter einem Winkel keilförmig, was einerseits die Erzeugung der Kerbvertiefung erleichtert und andererseits eine gerichtete Verspannung, und zwar in Richtung der Längsachse der Vorrichtung ermöglicht.

Der Winkel zwischen der Längsachse der Vorrichtung und einer Zentralachse der Durchgangsöffnung, welche den Spannmechanismus beherbergt, beträgt zwischen ca. 5 ° und 30 °, vorzugsweise ca. zwischen 12 ° und 22 °.

Nach einer Variante der Erfindung ist die Vorrichtung stabförmig ausgebildet, weist eine Vorderseite, eine Rückseite und eine Längsachse auf, wobei der Kopf ein Ende der Vorrichtung darstellt und der Korpus ein anderes Ende der Vorrichtung aufweist. Nach einer Ausführungsform der Erfindung weist das Ende des Korpus dabei eine Endfläche auf, die in Bezug auf eine Fläche, deren Flächennormale im Wesentlichen parallel zur Längsachse der stabförmigen Vorrichtung ist, zur Rückseite der Vorrichtung geneigt ist. Die Neigung der Endfläche kann dabei zwischen ca. 5 ° und 30 °, vorzugsweise zwischen ca. 12 ° und 22 ° zur Längsachse der Vorrichtung betragen.

Nach einer Variante der Erfindung verläuft die Durchgangsöffnung durch die Endfläche der Vorrichtung, was den Vorteil hat, dass die Durchgangsöffnung beispielsweise senkrecht zur Endfläche erzeugt werden kann und an der Vorderseite der stabförmigen Vorrichtung austritt. Insbesondere auf diese Weise ergibt sich die Möglichkeit eine Kerbvertiefung in einem Element keilförmig zu erzeugen. Darüber hinaus ist die geneigte Endfläche, durch die die Durchgangsöffnung, in der die Spannschraube angeordnet ist, verläuft, verhältnismäßig gut mit Werkzeugen, insbesondere einem Schraubendreher zugänglich, so dass die Verspannung der Vorrichtung mit den zu verbindenden Elementen problemlos bewerkstelligt werden kann.

Nach einer Ausführungsform der Erfindung weist die Vorrichtung des Weiteren eine Fixierschraube auf, welche nach einer Variante der Erfindung zumindest teilweise in einer zweiten, zumindest teilweise mit einem Gewinde versehenen Durchgangsöffnung angeordnet ist, welche Durchgangsöffnung vorzugsweise durch die Rückseite und Vorderseite der stabförmigen Vorrichtung verläuft.

Nach einer weiteren Ausführungsform der Erfindung ist auch die Fixierschraube auf ihrer dem Schraubenkopf abgewandten Seite derart ausgebildet, dass in einem Element eine Kerbvertiefung erzeugbar ist.

Bevorzugt weist die Fixierschraube auf ihrer dem Schraubenkopf abgewandten Seite einen Hohlkegel, eine Hohlkehle oder eine Nut auf, um eine weitere Kerbvertiefung in einem Element erzeugen zu können und eine nochmals verbesserte Verspannung hinsichtlich einer Verschiebefestigkeit zu erzielen.

Eine Variante der Erfindung sieht vor, das die Fixierschraube aus einem harten Material, bevorzugt einem gehärteten Stahl, ausgebildet ist. Nach einer Ausführungsform der Erfindung ist die die Fixierschraube beherbergende zweite Durchgangsöffnung ebenfalls unter einem Winkel zur Längsachse der Vorrichtung angeordnet, wobei der Winkel zwischen der Längsachse der Vorrichtung und einer Zentralachse der zweiten Durchgangsöffnung zwischen ca. 5 ° und 30 °, vorzugsweise zwischen ca. 8 ° und 12 ° betragen kann.

Nach einer Variante der Erfindung weist die Vorrichtung einen federbelasteten Körper auf, bei dem es sich beispielsweise um eine Kugel handeln kann. Der federbelastete Körper kann in einer dritten Öffnung der Vorrichtung angeordnet sein, wobei es sich bei der dritten Öffnung der Vorrichtung um eine Sacköffnung, beispielsweise eine Sackbohrung, handeln kann, in der die Kugel beispielsweise unter Federvorspannung gegen einen Haltering gedrückt wird, welcher es ermöglicht, dass die Kugel zumindest teilweise unter Federvorspannung aus der dritten Öffnung herausragt.

Weitere Varianten der Erfindung sehen vor, dass der Kopf und der Korpus der Vorrichtung relativ zueinander um eine Schwenkachse schwenkbar sind, so dass die Verspannungsmöglichkeiten der Vorrichtung mit Elementen erweitert sind.

Bevorzugt ist die Schwenkachse im Wesentlichen senkrecht zur Längsachse der Vorrichtung ausgerichtet, wobei nach einer Variante der Erfindung der fest mit dem Kopf verbundene Steg zusammen mit dem Kopf und die Schwenkachse schwenkbar ist.

Die die Montagevorrichtung betreffende Aufgabe wird durch eine Montagevorrichtung gelöst, die wenigstens eine Vorrichtung, wie vorstehend beschrieben, aufweist und wenigstens zwei miteinander zu verbindende Elemente.

Nach Varianten der Erfindung können die Elemente gleichartig und/oder verschiedenartig ausgebildet sein, d. h. beispielsweise unterschiedliche Abmessungen in Länge, Höhe und Breite aufweisen, wobei jedes Element jedoch jeweils wenigstens eine Nut, insbesondere eine Profilnut, umfasst. Bevorzugt ist von zwei miteinander zu verbindenden Elementen wenigstens ein Element zumindest teilweise aus einem verhältnismäßig weichem Material, beispielsweise aus Aluminium ausgebildet, in dem die zuvor erwähnte Kerbvertiefung bzw. die Kerbvertiefungen verhältnismäßig einfach erzeugbar sind.

Die das Verfahren betreffende Aufgabe wird gelöst durch ein Verfahren zum Verbinden zweier Elemente miteinander unter Verwendung einer der vorstehend beschriebenen Vorrichtungen, aufweisend die folgenden Verfahrensschritte:
a) Anordnung des Korpus der Vorrichtung in einer Nut eines ersten Elementes,
b) Anordnung des Kopfes der Vorrichtung in einer Nut eines zweiten Elementes,
c) Bewegung der Vorrichtung längs der Nut des ersten Elementes zur im Wesentlichen spielfreien Anlage des Kopfes der Vorrichtung in der Nut des zweiten Elementes und/oder zur im Wesentlichen spielfreien Anlage des ersten und zweiten Elementes aneinander und
d) Anziehen der Spannschraube zum Eintreiben des Bolzens in das erste Element und zum Verspannen des Korpus in der Nut des ersten Elementes und des Kopfes in der Nut des zweiten Elementes.

Vor der Verspannung der beiden Elemente mittels der Vorrichtung zum Verbinden der beiden Elemente wird also die Vorrichtung mit dem Korpus in einer Nut des ersten Elementes und mit dem Kopf in einer Nut des zweiten Elementes angeordnet. Die Abmessungen der Nuten der Elemente, des Kopfes der Vorrichtung und des Korpus der Vorrichtung sind dabei derart aufeinander abgestimmt, dass durch ein Bewegen der Vorrichtung längs der Nut des ersten Elementes der Kopf der Vorrichtung im Wesentlichen spielfrei an Widerlagerflächen der Nut des zweiten Elementes zur Anlage bringbar ist, wodurch bevorzugt auch das erste und das zweite Element im Wesentlichen spielfrei aneinander anliegen. Anschließend kann die Verspannung mittels des Spannmechanismus der Vorrichtung erfolgen, wobei einerseits durch das keilförmige Einpressen des Bolzens in eine Befestigungsfläche des ersten Elementes unter einem Winkel zur Längsachse der Vorrichtung eine Fixierung der Elemente und der Vorrichtung relativ zueinander sowie durch zunehmendes Anziehen ein gerichtetes Verspannen der Elemente und der Vorrichtung erfolgt.

Nach einer Variante der Erfindung werden vor dem Anziehen der Spannschraube zum Eintreiben des Bolzens in das erste Element die Elemente nach der im Wesentlichen spielfreien Ausrichtung zunächst durch ein leichtes Anziehen der Fixierschraube relativ zueinander fixiert. Erst dann erfolgt das Anziehen der Spannschraube zum Eintreiben des Bolzens in das erste Element und somit zum gerichteten Verspannen. Anschließend wird nach einer weiteren Variante der Erfindung die Fixierschraube fest angezogen, wodurch nochmals eine Kerbvertiefung mittels der Fixierschraube erzeugt wird, die die Fixierung der Elemente und der Vorrichtung relativ zueinander nochmals erhöht.

Ein Ausführungsbeispiel der Erfindung ist in den beigefügten schematischen Zeichnungen dargestellt. Es zeigen:
- FIG 1 bis 5: verschiedene Ansichten einer ersten Ausführungsform einer Vorrichtung zum Verbinden zweier Elemente,
- FIG 6: eine Ansicht des Schnitts gemäß FIG 3 in Richtung der Pfeile A,
- FIG 7: in vergrößerter Darstellung den Ausschnitt B aus FIG 6,
- FIG 8 bis 12: verschiedene Ansichten eine zweiter Ausführungsform einer Vorrichtung zum Verbinden zweier Elemente,
- FIG 13: die Ansicht des Schnitts gemäß FIG 10 in Richtung der Pfeile A,
- FIG 14: in vergrößerter Darstellung den Ausschnitt C aus FIG 13,
- FIG 15: die Verbindung zweier Elemente mit Hilfe der Vorrichtung aus FIG 1,
- FIG 16: eine Ansicht des Schnitts gemäß FIG 15 in Richtung der Pfeile D und
- FIG 17: die Draufsicht auf die Anordnung aus FIG 15.

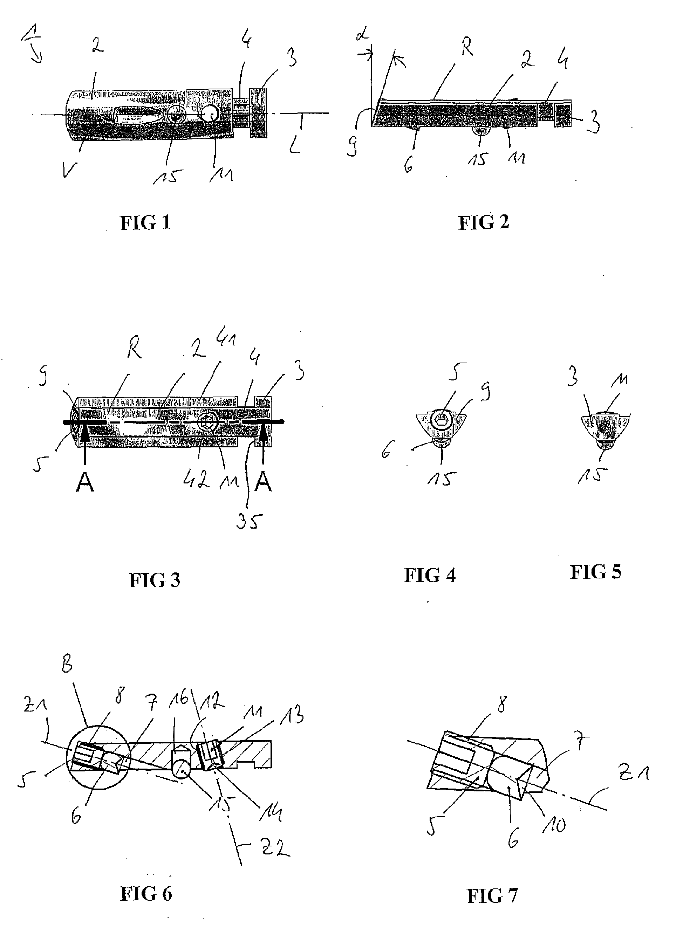

In den FIG 1 bis 5 sind verschiedene Ansichten einer Vorrichtung zum Verbinden zweier Elemente dargestellt, welche Vorrichtung im Folgenden als Verbinder 1 bezeichnet wird.

Der Verbinder 1 weist im Falle des vorliegenden Ausführungsbeispiels einen Korpus 2, einen Kopf 3 und einen den Korpus 2 und den Kopf 3 verbindenden Steg 4 auf. Der Verbinder 1 ist stabförmig ausgeführt und umfasst eine Längsachse L. Des Weiteren umfasst der Verbinder 1 einen Spannmechanismus, welcher im Falle des vorliegenden Ausführungsbeispiels eine Spannschraube 5 und einen zylinderförmigen Kerbbolzen 6 aufweist, die axial fluchtend hintereinander angeordnet sind. Die Spannschraube 5 und der Kerbbolzen 6 sind in einer ersten Durchgangsbohrung 7 des Verbinders 1 angeordnet, welche Durchgangsbohrung 7 zumindest teilweise ein Gewinde 8 zum Einschrauben der Spannschraube 5 aufweist.

Wie insbesondere der FIG 2 entnommen werden kann, stellt der Kopf 3 ein Ende des Verbinders 1 dar und der Korpus 2 weist das andere Ende des Verbinders 1 auf. Das Ende des Korpus 2 umfasst dabei eine Endfläche 9, die gegenüber einer Fläche, deren Flächenormale im Wesentlichen parallel zur Längsachse L ausgerichtet ist, zur Rückseite R des Verbinders 1 geneigt ist. Die Neigung der Endfläche 9 zur Rückseite R des Verbinders 1 ist insbesondere aus der Seitenansicht des Verbinders 1 gemäß FIG 2 sowie aus der Rückansicht des Verbinders 1 gemäß FIG 3 zu erkennen. Der Neigungswinkel α der Endfläche 9 beträgt dabei zwischen ca. 5 ° und 30 °, vorzugsweise zwischen ca. 12 ° und 22 °. Im Falle des vorliegenden Ausführungsbeispiels beträgt der Neigungswinkel α 17 °.

Die bereits erwähnte Durchgangsbohrung 7, welche eine Zentralachse Z1 aufweist, ist im Falle des vorliegenden Ausführungsbeispiels derart in den Verbinder 1 eingebracht, dass die Zentralachse Z1 im Wesentlichen senkrecht auf der Endfläche 9 steht, so dass die Durchgangsöffnung 7 in einem Winkel zur Längsachse L des Verbinders 1 angeordnet ist. Der Winkel zwischen der Längsachse L des Verbinders und der Zentralachse Z1 der Durchgangsöffnung 7 kann zwischen ca. 5 ° und 30 °, vorzugsweise zwischen ca. 12 ° und 22 ° betragen. Im Falle des vorliegenden Ausführungsbeispiels, bei dem die Zentralachse Z1 senkrecht auf der Endfläche 9 steht, beträgt der Winkel der Zentralachse Z1 der ersten Durchgangsöffnung 7 zu der Längsachse L des Verbinders 1 ebenfalls 17 ° und stimmt mit dem Neigungswinkel α der Endfläche 9 überein.

Wie den FIG 6 und 7 entnommen werden kann, wirkt im Falle des vorliegenden Ausführungsbeispiels die eine Sechskantausnehmung aufweisende Spannschraube 5 direkt mit dem Kerbbolzen 6 zusammen. Beim Eindrehen der Spannschraube 5 in das Gewinde 8 der Durchgangsbohrung 7 wird demnach der Kerbbolzen 6 in Richtung der Zentralachse Z1 der Durchgangsbohrung 7 vorangetrieben. Die Spannschraube 5 ist bevorzugt als feste bzw. hochfeste Schraube ausgebildet. Der Kerbbolzen 6 ist auf seiner der Spannschraube 5 abgewandten Seite bevorzugt derart ausgebildet, dass er in einem noch zu beschreibenden Element eine Kerbvertiefung erzeugen kann. Hierzu weist der Kerbbolzen 6 im Falle des vorliegenden Ausführungsbeispiels einen Hohlkegel 10 auf. Anstelle des Hohlkegels 10 kann der Kerbbolzen 6 jedoch auch mit einer Hohlkehle oder einer Nut oder in anderer Weise mit einer Ausnehmung versehen sein, um eine Kerbvertiefung in einem Element erzeugen zu können. Bevorzugt ist der Kerbbolzen 6 hierzu aus einem harten Material, insbesondere aus einem gehärteten Stahl, ausgebildet.

Wie den FIG 6 und 7 weiter entnommen werden kann, sind die Spannschraube 5 und der Kerbbolzen 6 nicht mechanisch miteinander verbunden, sondern liegen lose aneinander an, so dass bei einem Anziehen der Spannschraube 5 im Wesentlichen nur diese gedreht wird und der Kerbbolzen 6 nur durch eine von der Spannschraube 6 auf ihn ausgeübte Schubkraft in Richtung der Zentralachse Z1 der Durchgangsbohrung 7 bewegt wird. Um die Reibkräfte zwischen der Spannschraube 5 und dem Kerbbolzen 6 möglichst gering zu halten, ist im Falle des vorliegenden Ausführungsbeispiels zwischen der Spannschraube 5 und dem Kerbbolzen 6 ein nicht näher erkennbares Schmiermittel vorhanden. Zusätzlich oder alternativ kann die Spannschraube 5 an ihrer dem Kernbolzen 6 zugewandten Seite derart ausgebildet sein, dass die Fläche der Spannschraube 5, mit der die Spannschraube 5 mit dem Kernbolzen 6 in Wechselwirkung tritt, möglichst klein ist. Dies lässt sich beispielsweise dadurch erreichen, dass die Spannschraube 5 in nicht dargestellter Weise eine Kugelspitze oder einen Flachkegel aufweist.

Im Falle des vorliegenden Ausführungsbeispiels ist die Spannschraube 5 leicht magnetisch ausgeführt, um den Kerbbolzen 6 vor dem Einpressen in ein Element in der Durchgangsbohrung 7 zu halten und ein Herausfallen des Kerbbolzens 6 aus dem Verbinder 1 zu vermeiden. Der Kerbbolzen 6 kann jedoch auch in anderer Weise, beispielsweise mittels einer Führung, in der Durchgangsbohrung 7 gehalten sein.

Der Verbinder 1 weist im Falle des vorliegenden Ausführungsbeispiels des Weiteren eine Fixierschraube 11 auf, die zumindest teilweise in einer zweiten zumindest teilweise mit einem Gewinde 12 versehenen Durchgangsbohrung 13 angeordnet ist. Die Fixierschraube 11 ist ebenfalls bevorzugt aus einem harten Material, insbesondere einem gehärteten Stahl, ausgebildet und ist auf ihrer dem Schraubenkopf abgewandten Seite derart ausgebildet, dass in einem Element wiederum eine Kerbvertiefung erzeugbar ist. Bevorzugt weist die Fixierschraube 11 auf ihrer dem Schraubenkopf abgewandten Seite einen Hohlkegel 14, wie im Falle des vorliegenden Ausführungsbeispiels oder eine Hohlkehle oder eine Nut auf. Die zweite Durchgangsbohrung 13, welche eine Zentralachse Z2 aufweist, ist ebenfalls unter einem Winkel zur Längsachse L des Verbinders 1 angeordnet. Der Winkel zwischen der Längsachse L und der Zentralachse Z2 der zweiten Durchgangsbohrung 13 beträgt in der Regel zwischen ca. 5 ° und 30 °, vorzugsweise zwischen ca. 8 ° und 12 °.

Im Falle des vorliegenden Ausführungsbeispiels beträgt der Winkel zwischen der Längsachse L und der Zentralachse Z2 der zweiten Durchgangsbohrung 13 ca. 10 °.

Als weiteres Merkmal weist der Verbinder 1 im Falle des vorliegenden Ausführungsbeispiels einen federbelasteten Körper in Form einer Kugel 15 auf, die in einer Sackbohrung 16 angeordnet ist und in in den Figuren nicht dargestellter Weise mittels eines Halterings an ihrem Austritt aus der Sackbohrung 16 gehindert wird. In der Sackbohrung 16 ist in in den Figuren ebenfalls nicht dargestellter Weise eine Feder angeordnet, die die Kugel 15 derart gegen den Haltering drängt, dass diese zumindest teilweise aus der Sackbohrung 16 herausragt.

Die FIG 4 zeigt im Übrigen eine Draufsicht auf die Oberseite des Verbinders 1 mit der Endfläche 9 und die FIG 5 eine Ansicht auf die Unterseite und damit auf den Kopf 3 des Verbinders 1.

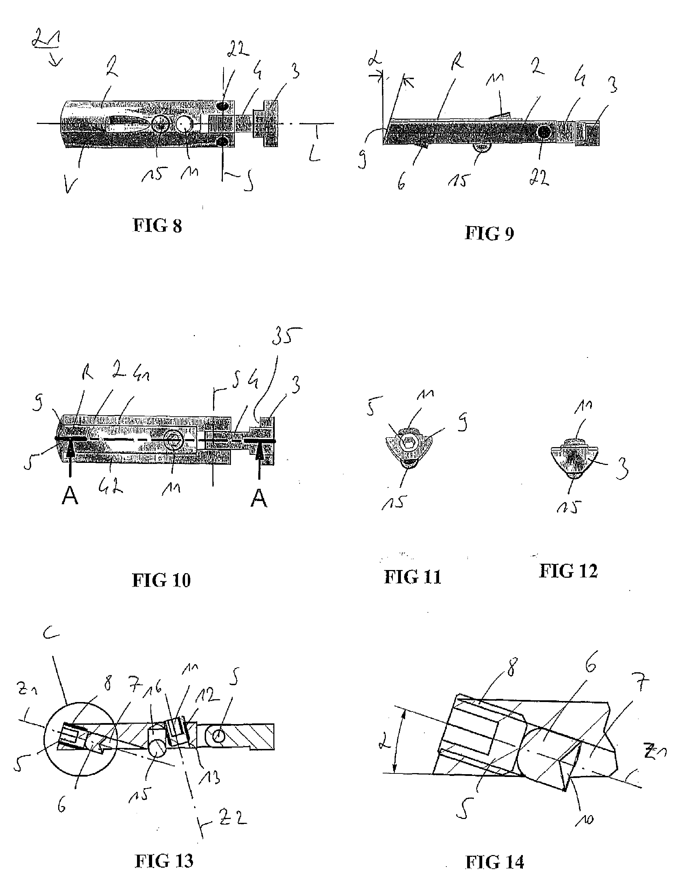

In den FIG 8 bis 14 ist eine zweite Ausführungsform einer erfindungsgemäßen Vorrichtung zum Verbinden zweier Elemente miteinander dargestellt, welche als Verbinder 21 gekennzeichnet ist. Komponenten des Verbinders 21, welche mit Komponenten des Verbinders 1 wenigstens im Wesentlichen übereinstimmen und wenigstens im Wesentlichen dieselbe Funktion erfüllen, sind daher mit gleichen Bezugszeichen versehen.

Im Grunde unterscheidet sich der Verbinder 21 von dem Verbinder 1 nur dahingehend, dass der Kopf 3 und der Steg 4, welche im Falle des vorliegenden Ausführungsbeispiels fest miteinander verbunden sind, und der Korpus 2 des Verbinders 21 relativ zueinander um eine Schwenkachse S schwenkbar sind. Im Falle des vorliegenden Ausführungsbeispiels ist die Schwenkachse S im Wesentlichen senkrecht zu der Längsachse L des Verbinders 21 ausgerichtet. Die Schwenkung wird im Falle des vorliegenden Ausführungsbeispiels dadurch ermöglicht, dass der Korpus 2 und der Steg 4 jeweils eine miteinander fluchtende Durchgangsbohrung aufweisen, durch die ein Bolzen 22 geführt ist, der die Schwenkung des Korpus 2 und des mit dem Kopf 3 verbundenen Steges 4 relativ zueinander ermöglicht.

Abgesehen davon stimmt der Aufbau des Verbinders 21 im Wesentlichen mit dem Aufbau des Verbinders 1 überein.

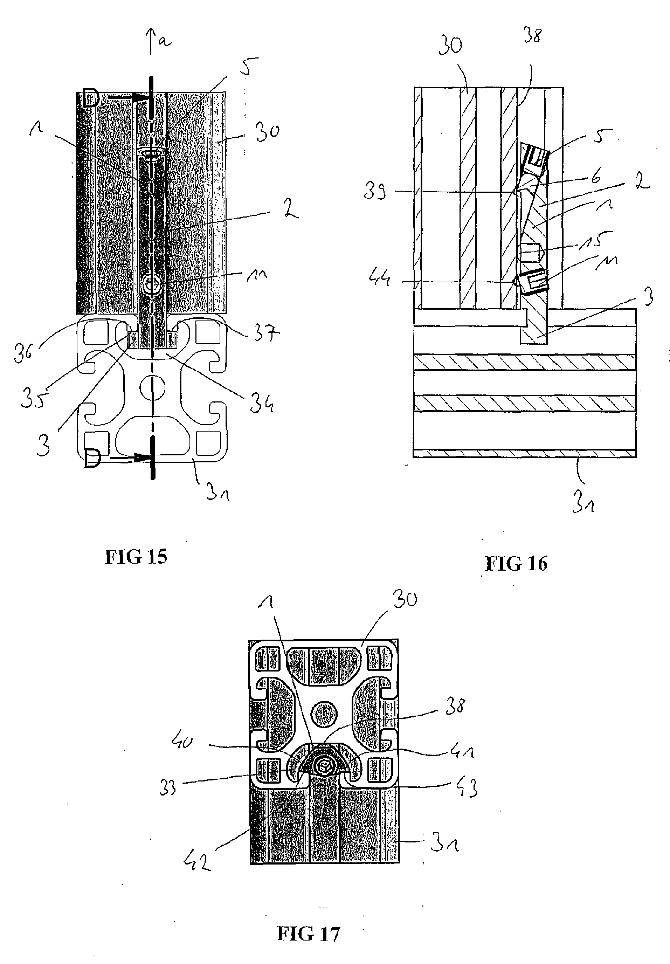

In den FIG 15 bis 17 ist die Verbindung zweier Elemente 30 und 31 mit Hilfe des in den FIG 1 bis 7 dargestellten Verbinders 1 veranschaulicht. Die Elemente 30 und 31 sind im Falle des vorliegenden Ausführungsbeispiels gleich ausgebildet, was allerdings nicht notwendigerweise der Fall sein muss. Bei den Elementen 30 und 31 handelt es sich im Falle des vorliegenden Ausführungsbeispiels jeweils um einen Profilstab aus Aluminium. Jeder der Profilstäbe 30, 31 weist im Falle des vorliegenden Ausführungsbeispiels drei gleichartige Profilnuten mit einem ankerförmigen Hohlraum auf.

Der Verbinder 1 wird zunächst mit seinem Korpus 2 in die Profilnut 33 des Elementes 30 eingeschoben. Die federbelastete Kugel 15 rollt dabei auf einer Befestigungsfläche 38 der Profilnut 33 und bewirkt durch ihre Federbelastung eine erste Anlage von Anlagenflächen 40, 41 des Korpus 2 an Gegenflächen 42, 43 der Profilnut 33, die die Ausrichtung der Elemente 30, 31 relativ zueinander erleichtert.

Anschließend wird der Kopf 3 des Verbinders 1 in die Profilnut 34 des Profilstabes 31 eingeführt, wobei die Elemente 30 und 31 im Wesentlichen in einem 90 °-Winkel relativ zueinander ausgerichtet werden. Der Verbinder 1 wird dann beispielsweise per Hand längs der Profilnut 33 bewegt, was in FIG 15 mit dem Pfeil a gekennzeichnet ist. Dadurch ergibt sich eine im Wesentlichen spielfreie Anlage einer Anlagefläche 35 des Kopfes 3 an zwei Gegenflächen 36, 37 der Profilnut 34. Jetzt wird die Fixierschraube 11 leicht angezogen, um ein Absinken des Verbinders 1 in der Profilnut 34 zu verhindern und den Verbinder 1 in einer Startposition für das Verspannen des Verbinders 1 und der Elemente 30, 31 zu halten.

Anschließend wird durch Eindrehen der Spannschraube 5 der gehärtete Kerbbolzen 6 gegen die Befestigungsfläche 38 der Profilnut 33 gepresst und durch weiteres Eindrehen der Spannschraube 5 in der Befestigungsfläche 38 der Profilnut 33 durch die Ausbildung des Kerbbolzens 6 mit einem Hohlkegel 10 eine Kerbvertiefung 39 eingepresst, die als Gegenlager für den Kerbbolzen 6 dient. Je stärker die Spannschraube 5 angezogen wird, umso mehr formt sich die Kerbvertiefung 39 als Gegenlager in der Befestigungsfläche 38 der Profilnut 33 aus. Dabei wird der Verbinder 1 durch die entstehende Schubkraft in entgegengesetzter Richtung zur Kerbvertiefung 39 gedrückt. Dadurch wirkt auch eine Spannkraft in Richtung der Längsachse L des Verbinders 1 erzeugt, die den Kopf 3 des Verbinders 1, insbesondere die Anlagefläche 35 des Kopfes 3 des Verbinders 1 gegen die Gegenflächen 36 und 37 der Nut 34 presst und für eine Verspannung sorgt. Darüber hinaus werden die Anlagefläche 40, 41 des Verbinders 1 gegen die Gegenflächen 42, 43 der Nut 33 gepresst, wodurch eine Verspannung des Korpus 2 des Verbinders 1 in der Nut 33 bewerkstelligt wird.

Nach Verspannung der Profilstäbe 30, 31 und des Verbinders 1 miteinander wird die Fixierschraube 11 ebenfalls fest angezogen und erzeugt durch ihre Ausbildung mit einem Hohlkegel 14 eine zweite Kerbvertiefung 44 in der Befestigungsfläche 38 der Profilnut 33 zur weiteren Fixierung des Verbinders 1. Die Kerbvertiefung 44 stellt ein Gegenlager für die Fixierschraube 11 dar, wodurch das Gesamtsystem nochmals gegen ein Verschieben gesichert wird und wodurch zusätzlich Spannkräfte erzeugt werden.

Der Verbinder 1 und die Elemente 30, 31 stellen im Übrigen ein Montagesystem dar, das selbstverständlich noch mehr Verbinder und Elemente umfassen kann.

Die vorstehend beschriebenen Verbinder sowie die Verbinder und Profilstäbe umfassende Montagevorrichtung stellen ein Ausführungsbeispiel der Erfindung dar. Die Verbinder 1 und 21 sowie die Profilstäbe 30 und 31 können im Rahmen der Erfindung also auch anders ausgeführt sein.

Beispielsweise muss der Verbinder nicht notwendigerweise eine Fixierschraube oder einen federbelasteten Körper aufweisen. Der Verbinder kann vielmehr nur einen Spannmechanismus, einen Spannmechanismus und eine Fixierschraube, einen Spannmechanismus und einen federbelasteten Körper oder, wie im Ausführungsbeispiel beschrieben, einen Spannmechanismus, eine Fixierschraube und einen federbelasteten Körper aufweisen.

Ebenso ist die formmäßige Ausgestaltung des Verbinders, wie er vorstehend beschrieben ist, nicht einschränkend zu verstehen. Vielmehr kann der Verbinder auch eine andere Querschnittsformen wie die vorstehend gezeigte aufweisen.

Ebenso sind die Winkelangaben zur Anordnung der Endfläche des Korpus oder zur Führung der Durchgangsbohrungen nicht einschränkend zu verstehen.

Bei der Spannschraube und der Fixierschraube muss es sich nicht notwendigerweise um Schrauben mit einem mit einem Sechskant versehen Schraubenkopf handeln.

Des Weiteren müssen die Schrauben sowie der Kerbbolzen nicht notwendigerweise aus einem Metall, einer Metalllegierung oder einem Stahl ausgebildet sein, sondern können auch aus einem festen Kunststoff oder einem anderen geeigneten Material ausgebildet sein.

Ebenso können auch Profilstäbe aus einem anderen Material als Aluminium ausgebildet sein, welches die Einbringung einer Kerbvertiefung erlaubt.

Die Verbindung der Elemente muss im Übrigen nicht unter einem 90°-Winkel erfolgen. Vielmehr sind auch andere Verbindungswinkel möglich, was durch eine Anpassung der Anlageflächen der Elemente bewerkstelligt werden kann.

### Bezugszeichenliste

- 1: Verbinder
- 2: Korpus des Verbinders
- 3: Kopf des Verbinders
- 4: Steg des Verbinders
- 5: Spannschraube
- 6: Kerbbolzen
- 7: erste Durchgangsbohrung
- 8: Gewinde
- 9: Endfläche des Korpus
- 10: Hohlkegel
- 11: Fixierschraube
- 12: Gewinde
- 13: zweite Durchgangsbohrung
- 14: Hohlkegel
- 15: Kugel
- 16: Sackbohrung
- 21: Verbinder
- 22: Bolzen
- 30, 31: Profilstäbe
- 33: Profilnut
- 34: Profilnut
- 35: Anlagefläche des Kopfes
- 36, 37: Gegenflächen der Profilnut 34
- 38: Befestigungsfläche der Profilnut 33
- 39: erste Kerbvertiefung
- 40, 41: Anlageflächen des Korpus
- 42, 43: Gegenflächen der Profilnut 33
- 44: zweite Kerbvertiefung
- L: Längsachse des Verbinders
- Z1: erste Zentralachse der ersten Durchgangsbohrung
- Z2: zweite Zentralachse der zweiten Durchgangsbohrung
- R: Rückseite des Verbinders
- V: Vorderseite des Verbinders
- S: Schwenkachse
- a: Bewegungsrichtung bzw. Spannrichtung
- α: Neigungswinkel

## Patentansprüche

1. Vorrichtung zum Verbinden wenigstens zweier Elemente (30, 31) miteinander, welche an den beiden Elementen (30, 31) angeordnet wird, aufweisend, wenigstens einen Spannmechanismus mit einem Bolzen (6) und einer Spannschraube (5), welche hintereinander zumindest teilweise in einer zumindest teilweise mit einem Gewinde (8) versehenen Durchgangsöffnung (7) angeordnet sind, so dass durch ein Anziehen der Spannschraube (5) in dem Gewinde (8) der Durchgangsöffnung (7) der Bolzen (6) derart vorantreibbar ist, dass dieser gegen eines der zwei miteinander zu verbindenden Elemente (30, 31) pressbar ist.

2. Vorrichtung nach Anspruch 1, welche einen wenigstens eine Anlagefläche (40, 41) aufweisenden Korpus (2) und wenigstens einen wenigstens eine Anlagefläche (35) aufweisenden Kopf (3) umfasst, welche vorzugsweise über einen Steg (4) miteinander verbunden sind.

3. Vorrichtung nach Anspruch 2, deren Korpus (2) zum Verbinden der beiden Elemente (30, 31) miteinander zumindest teilweise in oder an dem ersten der beiden Elemente (30) angeordnet werden kann, wobei die wenigstens eine Anlagefläche (40, 41) des Korpus (2) an wenigstens einer Gegenfläche (42, 43) des ersten Elementes (30) zur Anlage bringbar ist.

4. Vorrichtung nach Anspruch 3, deren Korpus (2) zum Verbinden der beiden Elemente (30, 31) miteinander zumindest teilweise in einer Nut (33) des ersten der beiden Elemente (30) angeordnet werden kann, wobei die wenigstens eine Anlagefläche (40, 41) des Korpus (2) an wenigstens einer Gegenfläche (42, 43) der Nut (33) des ersten Elementes (30) zur Anlage bringbar ist.

5. Vorrichtung nach einem der Ansprüche 2 bis 4, deren Kopf (3) zum Verbinden der beiden Elemente (30, 31) miteinander zumindest teilweise in oder an dem zweiten der beiden Elemente (31) angeordnet werden kann, wobei die wenigstens eine Anlagefläche (35) des Kopfes (3) an wenigstens einer Gegenfläche (36, 37) des zweiten Elementes (31) zur Anlage bringbar ist

6. Vorrichtung nach Anspruch 5, deren Kopf (3) zum Verbinden der beiden Elemente (30, 31) miteinander zumindest teilweise in einer Nut (34) des zweiten der beiden Elemente (31) angeordnet werden kann, wobei die wenigstens eine Anlagefläche (35) des Kopfes (3) an wenigstens einer Gegenfläche (36, 37) der Nut (34) des zweiten Elementes (31) zur Anlage bringbar ist

7. Vorrichtung nach einem der Ansprüche 1 bis 6, bei der die Spannschraube (5) und der Bolzen (6) im Wesentlichen axial fluchtend hintereinander angeordnet sind.

8. Vorrichtung nach einem der Ansprüche 1 bis 7, bei der die Spannschraube (5) unmittelbar auf den Bolzen (6) einwirkt.

9. Vorrichtung nach einem der Ansprüche 1 bis 8, bei der die Fläche der Spannschraube (5), mit der die Spannschraube (5) mit dem Bolzen (6) in Wechselwirkung tritt, möglichst klein ist.

10. Vorrichtung nach einem der Ansprüche 1 bis 9, bei der die Spannschraube (5) eine Kugelspitze oder einen Flachkegel aufweist.

11. Vorrichtung nach einem der Ansprüche 1 bis 10, bei der zwischen Spannschraube (5) und Bolzen (6) ein Schmiermittel vorhanden ist.

12. Vorrichtung nach einem der Ansprüche 1 bis 11, bei der der Bolzen (6) auf seiner der Spannschraube (5) abgewandten Seite derart ausgebildet ist, dass in einem Element (30) eine Kerbvertiefung (39) erzeugbar ist.

13. Vorrichtung nach einem der Ansprüche 1 bis 12, bei der der Bolzen (6) auf seiner der Spannschraube (5) abgewandten Seite einen Hohlkegel (10) oder eine Hohlkehle oder eine Nut aufweist.

14. Vorrichtung nach einem der Ansprüche 1 bis 13, bei der der Bolzen (6) aus einem harten Material, vorzugsweise aus gehärtetem Stahl ist.

15. Vorrichtung nach einem der Ansprüche 1 bis 14, welche eine Längsachse (L) aufweist, wobei die den Spannmechanismus beherbergende Durchgangsöffnung (7) unter einem Winkel zur Längsachse (L) angeordnet ist.

16. Vorrichtung nach Anspruch 15, bei der der Winkel zwischen der Längsachse (L) und einer Zentralachse (Z1) der Durchgangsöffnung (7) zwischen ca. 5 ° und 30 °, vorzugsweise zwischen ca. 12 ° und 22 °, beträgt.

17. Vorrichtung nach einem der Ansprüche 2 bis 16, welche stabförmig ausgebildet ist, eine Rückseite (R) und eine Längsachse (L) aufweist, wobei der Kopf (3) ein Ende der Vorrichtung darstellt und der Korpus (2) ein anderes Ende der Vorrichtung aufweist.

18. Vorrichtung nach Anspruch 17, bei der das Ende des Korpus (2) eine Endfläche (9) aufweist, die in Bezug auf eine Fläche, deren Flächennormal im Wesentlichen parallel zur Längsachse (L) ist, zur Rückseite (R) der Vorrichtung geneigt ist.

19. Vorrichtung nach Anspruch 18, bei der der Neigungswinkel (α) der Endfläche (9) zwischen ca. 5 ° und 30 °, vorzugsweise zwischen ca. 12 ° und 22 °, beträgt.

20. Vorrichtung nach Anspruch 18 oder 19, bei der die Durchgangsöffnung (7) durch die Endfläche (9) verläuft.

21. Vorrichtung nach einem der Ansprüche 1 bis 20, welche eine Fixierschraube (11) aufweist.

22. Vorrichtung nach Anspruch 21, bei der die Fixierschraube (11) zumindest teilweise in einer zweiten, zumindest teilweise mit einem Gewinde (12) versehenen Durchgangsöffnung (13) angeordnet ist.

23. Vorrichtung nach Anspruch 21 oder 22, bei der die Fixierschraube (11) auf ihrer dem Schraubenkopf abgewandten Seite derart ausgebildet ist, dass in einem Element (30) eine Kerbvertiefung (44) erzeugbar ist.

24. Vorrichtung nach einem der Ansprüche 21 bis 23, bei der die Fixierschraube (11) auf ihrer dem Schraubenkopf abgewandten Seite einen Hohlkegel (14) oder eine Hohlkehle oder eine Nut aufweist.

25. Vorrichtung nach einem der Ansprüche 21 bis 24, bei der die Fixierschraube (11) aus einem harten Material, vorzugsweise aus einem gehärtetem Stahl ausgebildet ist.

26. Vorrichtung nach einem der Ansprüche 21 bis 25, bei der die die Fixierschraube (11) beherbergende zweite Durchgangsöffnung (13) unter einem Winkel zur Längsachse (L) angeordnet ist.

27. Vorrichtung nach Anspruch 26, bei der Winkel zwischen der Längsachse (L) und einer Zentralachse (Z2) der zweiten Durchgangsöffnung (13) zwischen ca. 5 ° und 30 °, vorzugsweise zwischen ca. 8 ° und 12 °, beträgt.

28. Vorrichtung nach einem der Ansprüche 1 bis 27, welche einen federbelasteten Körper (15) aufweist.

29. Vorrichtung nach Anspruch 28, bei der der Körper eine Kugel (15) ist.

30. Vorrichtung nach Anspruch 28 oder 29, bei der der federbelastete Körper (15) in einer dritten Öffnung (16) der Vorrichtung angeordnet ist.

31. Vorrichtung nach einem der Ansprüche 2 bis 30, bei der der Kopf (3) und der Korpus (2) der Vorrichtung relativ zueinander um eine Schwenkachse (S) schwenkbar sind.

32. Vorrichtung nach Anspruch 31, bei der die Schwenkachse (S) im Wesentlichen senkrecht zur Längsachse (L) der Vorrichtung ausgerichtet ist.

33. Vorrichtung nach Anspruch 31 oder 32, bei der der Steg (4) zusammen mit dem Kopf (3) um die Schwenkachse (S) schwenkbar ist.

34. Montagevorrichtung aufweisend wenigstens eine Vorrichtung (1, 21) nach einem der Ansprüche 1 bis 33 und wenigstens zwei miteinander zu verbindende Elemente (30, 31).

35. Montagevorrichtung nach Anspruch 34, bei der die Elemente (30, 31) jeweils wenigstens eine Nut (33, 34), insbesondere eine Profilnut, aufweisen.

36. Montagevorrichtung nach Anspruch 34 oder 35, bei der wenigstens eines der Elemente (30, 31) zumindest teilweise aus Aluminium ausgebildet ist.

37. Verfahren zum Verbinden zweier Elemente (30, 31) miteinander unter Verwendung einer Vorrichtung (1, 21) nach einem der Ansprüche 1 bis 33 aufweisend folgende Verfahrensschritte:
a) Anordnung des Korpus (2) der Vorrichtung (1) in einer Nut (33) eines ersten Elementes (30),
b) Anordnung des Kopfes (3) der Vorrichtung (1) in einer Nut (34) eines zweiten Elementes (31),
c) Bewegung der Vorrichtung (1) längs der Nut (33) des ersten Elementes (30) zur im Wesentlichen spielfreien Anlage des Kopfes (3) der Vorrichtung (1) in der Nut (34) des zweiten Elementes (31) und/oder zur im Wesentlichen spielfreien Anlage des ersten und zweiten Elementes (30, 31) aneinander,
d) Anziehen der Spannschraube (5) zum Eintreiben des Bolzens (6) in das erste Element (30) und zum Verspannen des Korpus (3) in der Nut (33) des ersten Elementes (30) und des Kopfes (3) in der Nut (34) des zweiten Elementes (31).

38. Verfahren nach Anspruch 37, bei dem vor dem Verfahrensschritt d) die Elemente (30, 31) durch leichtes Anziehen der Fixierschraube (11) relativ zueinander fixiert werden.

39. Verfahren nach Anspruch 37 oder 38, bei dem nach dem Verfahrensschritt d) die Elemente (30, 31) durch festes Anziehen der Fixierschraube (11) relativ zueinander fixiert werden.

## Geänderte Patentansprüche

### Geänderte Patentansprüche gemäss Regel 137(2) EPÜ.

**1.** Vorrichtung zum Verbinden wenigstens zweier Elemente (30, 31) miteinander, welche an den beiden Elementen (30, 31) angeordnet wird, aufweisend, wenigstens einen Spannmechanismus mit einer Spannschraube (5),
**dadurch gekennzeichnet, dass**
der Spannmechanismus zusätzlich einen Bolzen (6) aufweist und die Spannschraube (5) und der Bolzen (6) zumindest teilweise in einer zumindest teilweise mit einem Gewinde (8) versehenen Durchgangsöffnung (7) angeordnet sind, so dass durch ein Anziehen der Spannschraube (5) in dem Gewinde (8) der Durchgangsöffnung (7) der Bolzen (6) derart vorantreibbar ist, dass dieser gegen eines der zwei miteinander zu verbindenden Elemente (30, 31) pressbar ist.
